# NEUE EUROPÄISCHE PATENTSCHRIFT

(11) **EP 3 892 078 B2**
(45) Veröffentlichungstag und Bekanntmachung des Hinweises auf die Entscheidung über den Einspruch: **11.11.2026**
(45) Hinweis auf die Patenterteilung: 27.09.2023
(21) Anmeldenummer: 21166523.7
(22) Anmeldetag: 01.04.2021
(51) Int. Cl.: A01C 7/20, A01B 63/32

(54) **LANDWIRTSCHAFTLICHE ARBEITSMASCHINE UND VERFAHREN ZUM BETREIBEN EINER LANDWIRTSCHAFTLICHEN ARBEITSMASCHINE**
AGRICULTURAL MACHINE AND METHOD FOR OPERATING AN AGRICULTURAL MACHINE
MACHINE DE TRAVAIL AGRICOLE ET PROCÉDÉ D'OPÉRATION D'UNE MACHINE DE TRAVAIL AGRICOLE

(30) Priorität: 09.04.2020 DE 102020109975
(43) Veröffentlichungstag der Anmeldung: 13.10.2021
(73) Patentinhaber: Amazonen-Werke H. Dreyer SE & Co. KG, 49205 Hasbergen (DE)
(72) Erfinder: Mertens, Daniel, 26121 Oldenburg (DE); Koch, Jens, 29525 Uelzen (DE); Warns, Felix, 27804 Berne (DE); Hoffmann, Karl-Peter, 27798 Hude (DE)

(56) Entgegenhaltungen:
- EP-A1- 3 020 874
- EP-B1- 2 676 535
- DE-A1- 102004 043 565
- US-A1- 2013 325 267
- US-A1- 2014 214 284
- US-A1- 2017 142 897
- US-B2- 8 020 485
- US-B2- 8 763 713
- "Kverneland Packomat Model C and S", MARKETING INFORMATION, vol. 1, no. 8, 1 January 1998 (1998-01-01), pages 1 - 13, XP093194906
- KVERNELAND: "Packomat for mounted reversible ploughs", INSTRUCTION MANUAL NO. KK731042, 1 September 2003 (2003-09-01), pages 1 - 33, XP093194908

## Beschreibung

Die Erfindung betrifft ein Verfahren zum Betreiben einer landwirtschaftlichen Arbeitsmaschine gemäß dem Oberbegriff des Patentanspruches 1.

In einer Vielzahl von Anwendungsfällen innerhalb der Landwirtschaft werden an einem Schlepper anbaubare und/oder von diesem ziehbare landwirtschaftliche Arbeitsmaschinen zum Verteilen von granularem Material und/oder zum Bearbeiten einer landwirtschaftlichen Fläche eingesetzt. Als Sä- und/oder Düngermaschinen ausgeführte Arbeitsmaschinen sind hierbei häufig als Verteilmaschinen, insbesondere pneumatische Einzelkornsämaschinen, mit zumindest einem Sä- und/oder Bodenbearbeitungswerkzeug, insbesondere einem Sä- und/oder Düngerschar, ausgebildet. Gattungsgemäße Sä- und/oder Düngerschare sind typischerweise als Zinkenschare und/oder Scheibenschare, insbesondere Doppelscheibenschare, ausgeführt. Ferner umfassen derartige Verteilmaschinen auch Sä- und/oder Bodenbearbeitungswerkzeuge die beispielsweise als Tiefenführungs- und/oder Furchenandruckrollen ausgebildet sind.

Bodenbearbeitungsmaschinen umfassen wiederum zumindest ein in und/oder auf dem Boden andrückbares Bodenbearbeitungswerkzeug, das beispielsweise nach Art eines Schars, insbesondere Pflugs und/oder Grubbers und/oder Packers, ausgebildet ist. Ferner sind hierbei auch Hackwerkzeuge denkbar.

Um eine ausreichende Bearbeitung des Ackerbodens und/oder eine geeignete Ablagetiefe des granularen Materials zu erreichen, sind derartige Sä- und/oder Bodenbearbeitungswerkzeuge typischerweise mit einstellbarem Druck, insbesondere in Form eines Schardrucks, gegen die landwirtschaftliche Fläche, insbesondere den Ackerboden, andrückbar. Der Druck ist hierbei neben unterschiedlichen Parametern, wie beispielsweise der Beschaffenheit des Ackerbodens, auch unter anderem vom Betriebszustand der Arbeitsmaschine abhängig. Hierbei ist ein erster Betriebszustand eine Stellung einer Arbeitsmaschine, die zumindest nahezu vollständig in einem abgesenkten Zustand, insbesondere in Arbeitsstellung, verbringbar ist. Die Sä- und/oder Bodenbearbeitungswerkzeuge sind dabei zumindest teilweise mit einstellbarem Druck, insbesondere Schardruck, gegen den Ackerboden andrückbar. In einem zweiten Betriebszustand ist die Arbeitsmaschine zumindest nahezu vollständig in einer angehobenen Stellung, insbesondere in einer Transport- und/oder Vorgewendestellung, verbringbar. Hierbei ist die Arbeitsmaschine, insbesondere das zumindest eine Sä- und/oder Bodenbearbeitungswerkzeug, zumindest nahezu vollständig vom Ackerboden lösbar und/oder anhebbar.

Eine derartige als Verteilmaschine, insbesondere Einzelkornsämaschine, ausgebildete landwirtschaftliche Arbeitsmaschine zum Verteilen von granularem Material, insbesondere Saatgut und/oder Dünger, ist beispielsweise in der DE 10 2004 043 565 A1 beschrieben. Diese Arbeitsmaschine ist in unterschiedlichen Betriebszuständen betreibbar und weist zumindest ein Sä- und/oder Bodenbearbeitungswerkzeug auf, das über wenigstens einen Rahmen mit der Arbeitsmaschine gekoppelt ist. Die hier beschriebenen Sä- und/oder Bodenbearbeitungswerkzeuge sind im Stand der Technik typischerweise wie in der US 8 763 713 B2 beschrieben ausgeführt. Demnach umfasst eine derartige Arbeitsmaschine zumindest ein pneumatisches und/oder hydraulisches Druckeinstellsystem das zumindest ein dem Sä- und/oder Bodenbearbeitungswerkzeug zugeordnetes erstes Stellelement aufweist und dazu eingerichtet ist, das zumindest eine erste Stellelement mit einstellbarem Druck zu beaufschlagen und/oder zu entspannen. Ferner ist somit das Sä- und/oder Bodenbearbeitungswerkzeug mittels des Stellelementes und in Abhängigkeit des einstellbaren Drucks gegen den Ackerboden andrückbar. Außerdem weist die hier beschriebene Arbeitsmaschine zumindest ein Steuer- und/oder Regelsystem auf, welche mit dem Druckeinstellsystem, insbesondere dem zumindest einen ersten Stellelement, gekoppelt und dazu eingerichtet ist, den einstellbaren Druck anzupassen.

Eine derartige als Bodenbearbeitungsmaschine, insbesondere nach Art eines Reifenpackers, ausgebildete Arbeitsmaschine ist in der DE 10 2004 004 334 A1 beschrieben. Ebenso ist eine derartige landwirtschaftliche Arbeitsmaschine aus der Druckschrift US 2013/325267 A1 bereits bekannt.

Nachteilig bei den bisherigen Arbeitsmaschinen ist, dass der einstellbare Druck innerhalb des Druckeinstellsystems, insbesondere des zumindest einen ersten Stellelementes, auch während und/oder nach einem Wechsel der Betriebszustände zumindest nahezu vollständig beibehalten wird.

Die für den Arbeitsvorgang erforderlichen sehr hohen Drücke sind hierbei typischerweise vom Steuer- und/oder Regelsystem, insbesondere teilflächenspezifisch, abrufbar und für ein jeweiliges Sä- und/oder Bodenbearbeitungswerkzeug, insbesondere über das dazu zugeordnete Stellelement, einstellbar. Es liegen dabei Drücke von ungefähr 10 bis 50 bar oder mehr innerhalb des Druckeinstellsystems, insbesondere Stellelementes, an. Die hohen Drücke sind dabei für ein ausreichendes Eindringen in den Ackerboden und/oder das Andrücken der Furche, insbesondere des granularen Materials, mittels des Sä- und/oder Bodenbearbeitungswerkzeuges entscheidend. Wird eine Arbeitsmaschine im Verlauf des Arbeitsvorgangs vom ersten in einen zweiten oder anderen Betriebszustand verfahren oder verbracht, liegt dementsprechend weiterhin der hohe Druck, insbesondere Arbeitsdruck, innerhalb des Druckeinstellsystems und somit an dem zumindest einen Sä- und/oder Bodenbearbeitungswerkzeug an. Da das Sä- und/oder Bodenbearbeitungswerkzeug im zweiten Betriebszustand zumindest nahezu vollständig vom Ackerboden gelöst ist und somit ein derartig hoher Druck innerhalb der Arbeitsmaschine nicht erforderlich ist, wird das Druckeinstellsystem und/oder das Sä- und/oder Bodenbearbeitungswerkzeug unnötig starken Belastungen ausgesetzt. Zusätzlich führt ein erneutes Wechseln des Betriebszustandes, insbesondere ein zumindest teilweises wieder Absenken der Arbeitsmaschine, zu sehr hohen Belastungen innerhalb der Arbeitsmaschine, da der innerhalb des Druckeinstellsystems, insbesondere Stellelementes, einstellbare Druck, insbesondere Arbeitsdruck, zumindest teilweise überwunden werden muss, bis die Sä- und/oder Bodenbearbeitungswerkzeuge zumindest nahezu vollständig in den Ackerboden eingreifen und/oder diesen andrücken.

Neben den daraus resultierenden sehr hohen Belastungen der Arbeitsmaschine, insbesondere deren Bauteile, nehmen unter derartig hohen Drücken umgesetzte Wechsel der Betriebszustände, insbesondere zum Absenken der Arbeitsmaschine, einen besonders hohen Zeitaufwand in Anspruch. Dies wiederum schlägt sich negativ auf die Effizienz der Arbeitsmaschine aus. Ferner führt die zumindest nahezu permanente Generierung und/oder Überwindung der hohen Drücke auch zu besonders hohen Energieverbräuchen innerhalb des Schleppers und/oder der Arbeitsmaschine.

Im Stand der Technik sind Arbeitsmaschinen bekannt, die vor und/oder nach dem Wechsel der Betriebszustände das Druckeinstellsystem, insbesondere das zumindest eine erste Stellelement mit einem anderen, insbesondere einem niedrigeren Druck, beaufschlagen und/oder entlasten. Hierbei werden beispielsweise zusätzliche Ventile, insbesondere Sperrventile, vorgeschlagen die die Druckzufuhr zumindest teilweise umschalten, insbesondere absperren. Des Weiteren sind auch zusätzliche Druckentspannungsspeicher bekannt, die dem Druckeinstellsystem, insbesondere dem zumindest einen Stellelement, zugeordnet sind und somit eine Anpassung und/oder Entspannung des Drucks, insbesondere Arbeitsdrucks, durch ein Umschalten zumindest eines Ventils zulassen. Diese Systeme haben jedoch den entscheidenden Nachteil, dass diese besonders aufwendig und kostspielig sind. Die hohe Komplexität dieser Systeme weist einen besonders hohen Wartungs- bzw. Instandsetzungsaufwand und/oder Kostenaufwand auf. Darüber hinaus kann sich die permanente Generierung des hohen Drucks, insbesondere Arbeitsdrucks, schädlich auf die innerhalb des Druckeinstellsystems befindlichen Ventile und/oder Dichtungen auswirken.

Die der Erfindung zugrunde liegende Aufgabe besteht somit darin, ein Verfahren für eine landwirtschaftliche Arbeitsmaschine so zu gestalten, dass die Betriebszustände besonders schnell wechselbar und das Druckeinstellsystem zugleich besonders einfach und kostengünstig herzustellen ist. Insbesondere soll die Arbeitsmaschine besonders betriebssicher und komfortabel betreibbar sein.

Diese Aufgabe wird erfindungsgemäß durch den Gegenstand des Anspruch 1 gelöst.

Infolge dieser Maßnahme ist ein für das Druckeinstellsystem, insbesondere das zumindest eine Stellelement, einstellbarer Druck, insbesondere Schardruck, vorzugsweise automatisiert, aufgrund der Änderung der Betriebszustände anpassbar. Der Druck wird hierbei bevorzugt vom Steuer- und/oder Regelsystem auf einen für den jeweiligen Betriebszustand erforderlichen Druck angepasst. Alternativ oder zusätzlich kann der erforderliche Druck für den Maschinenbediener in einem Bedien- und/oder Anzeigemittel angezeigt und/oder von diesem angepasst werden. Das Druckeinstellsystem stellt den darin anliegenden Druck somit stets neu auf den für den jeweiligen Betriebszustand erforderlichen Druck ein. Das Druckeinstellsystem, insbesondere ein diesem zugeordnetes Fluidleitsystem, ist somit besonders einfach aufgebaut. Somit ist erreicht, dass die Arbeitsmaschine, insbesondere das zumindest eine Sä- und/oder Bodenbearbeitungswerkzeug, nur dann hohen Belastungen ausgesetzt wird, wenn dies der Arbeitsvorgang erfordert. Ferner ist somit sichergestellt, dass der Ackerboden zureichend oder nicht übermäßig bearbeitet wird.

In einer erfindungsgemäßen Arbeitsmaschine sind zumindest ein erster Druck, insbesondere Arbeitsdruck, und/oder zumindest ein zweiter Druck, insbesondere Entspannungsdruck, vom Steuer- und/oder Regelsystem und/oder durch einen Bediener einstellbar. Die Drücke werden dabei bevorzugt vom Steuer- und/oder Regelsystem berechnet und/oder abgerufen, wobei die Drücke alternativ oder zusätzlich von einem Maschinenbediener vor oder während der Bearbeitung der landwirtschaftlichen Fläche mittels eines Bedien- und/oder Anzeigemittels eingegeben werden. Der zweite Druck, insbesondere Entspannungsdruck, ist dabei geringer als der erste Druck. Besonders bevorzugt ist der zweite Druck auf unter 10 bar, vorzugsweise zumindest nahezu Umgebungsdruck, einstellbar. Alternativ oder zusätzlich kann die Höhe des zweiten Drucks, insbesondere Entspannungsdrucks, auch bereits bei der Herstellung der Arbeitsmaschine vorgegeben werden. Somit ist erreicht, dass neben einem für die Bearbeitung des Ackerbodens erforderlichen ersten Drucks ein zweiter Druck einstellbar und/oder verwendbar ist, der gerade so hoch ist, dass die Arbeitsmaschine zumindest teilweise mit besonders geringen oder zumindest nahezu ohne zusätzliche Belastungen betreibbar ist. Somit ist die Betriebssicherheit und/oder die Standzeit der erfindungsgemäßen Arbeitsmaschine, insbesondere des zumindest einen Sä- und/oder Bodenbearbeitungswerkzeuges, besonders gesteigert.

Darüber hinaus ist eine erfindungsgemäße Ausführungsform bevorzugt bei der zumindest ein weiterer Druck, insbesondere Zwischendruck, vom Steuer- und/oder Regelsystem und/oder einem Maschinenbediener einstellbar ist. Somit kann das Druckeinstellsystem, insbesondere das zumindest eine Stellelement, zusätzlich mit zumindest einem weiteren Druck, der bevorzugt zwischen dem ersten und zweiten Druck liegt, beaufschlagt werden.

In einer Weiterbildung der erfindungsgemäßen Arbeitsmaschine ist die Arbeitsmaschine zumindest teilweise zwischen einer abgesenkten Stellung, insbesondere Arbeitsstellung, und einer angehobenen Stellung, insbesondere Transport- und/oder Vorgewendestellung, verbringbar, wobei die Stellung vom Steuer- und/oder Regelsystem erfassbar und der Betriebszustand in Abhängigkeit der Stellung auswählbar ist. Je nach Ausführungsvariante der Arbeitsmaschine kann hierbei die gesamte und/oder nur ein Teil, insbesondere Abschnitt, der Arbeitsmaschine zwischen der abgesenkten und der angehobenen Stellung verfahren und/oder verbracht werden. Besonders bevorzugt wird die Arbeitsmaschine zumindest teilweise vom Schlepper, insbesondere mittels eines Dreipunktkrafthebers, angehoben und/oder abgesenkt. Die Stellung der Arbeitsmaschine wird hierbei bevorzugt über zumindest einen Sensor, insbesondere Näherungssensor, der dem Schlepper und/oder der Arbeitsmaschine zugeordnet ist, erfasst. Besonders bevorzugt sind hierbei mehrere Sensoren die entlang der abgesenkten und angehobenen Stellung angeordnet sind. Mittels der mehreren Sensoren können somit beispielsweise zusätzlich Zwischenstellungen erfasst werden, die wiederum zum Auswählen der Betriebszustände nutzbar sind. Ferner wird somit der Druck mittels der erfassbaren Zwischenstellungen auch alternativ oder zusätzlich auf zumindest einen weiteren Druck, insbesondere Zwischendruck, eingestellt. Diese Ausführungsform hat den entscheidenden Vorteil, dass die Arbeitsmaschine für den Maschinenbediener besonders komfortabel und einfach bedienbar ist und somit mögliche Fehlbedienungen minimiert werden.

Darüber hinaus ist eine Ausführungsform besonders bevorzugt bei dem bereits das Verlassen einer Stellung der Arbeitsmaschine erfassbar ist und der andere Betriebszustand somit bereits beim Verlassen einer Stellung ausgewählt und/oder angepasst wird.

In einer anderen bevorzugten Ausführungsform der erfindungsgemäßen Arbeitsmaschine ist die Position der Arbeitsmaschine erfassbar und der Betriebszustand in Abhängigkeit der Position auswählbar. Die Arbeitsmaschine und/oder der Schlepper umfasst hierbei bevorzugt zumindest eine Positionserfassungseinrichtung, insbesondere in Form von GPS, über die die aktuelle Position der Arbeitsmaschine erfasst wird. Des Weiteren sind vorzugsweise zusätzliche Informationen der zu bearbeitenden landwirtschaftlichen Fläche, insbesondere teilflächenspezifisch, in Form von Kartenmaterial auf dem Steuer- und/oder Regelsystem hinterlegt und/oder werden von diesem abgerufen. Somit kann für einen ersten Bereich der landwirtschaftlichen Fläche ein erster Betriebszustand und/oder für einen zweiten Bereich ein zweiter Betriebszustand verwendet werden. Über die Position der Arbeitsmaschine und/oder das hinterlegte Kartenmaterial kann das Steuer- und/oder Regelsystem bestimmen ob sich die Arbeitsmaschine innerhalb des ersten Bereiches, insbesondere auf dem zu bearbeitenden Ackerboden, oder innerhalb des zweiten Bereiches, insbesondere auf dem Vorgewende, befindet. Dementsprechend ist der erforderliche Betriebszustand bereits vor, nach oder während der Überfahrt der Bereiche, vorzugsweise automatisiert mittels des Steuer- und/oder Regelsystems, ausgewählt und/oder angepasst. Somit ist die Handhabbarkeit und/oder Bedienung der erfindungsgemäßen Arbeitsmaschine für einen Maschinenbediener noch weiter vereinfacht.

In einer anderen Weiterbildung der erfindungsgemäßen Arbeitsmaschine ist das zumindest eine erste Stellelement einfachwirkend ausgebildet. Das Stellelement ist hierbei bevorzugt als ein hydraulischer und/oder pneumatischer Arbeitszylinder ausgebildet der mit einem Fluid, insbesondere Öl oder Druckluft, betreibbar und/oder befüllbar ist. Durch die Verwendung eines einfach wirkenden Stellelementes ist die Arbeitsmaschine, insbesondere das dazu zugeordnete Druckeinstellsystem, noch weiter vereinfacht.

In einer weiteren bevorzugten Ausführungsform der erfindungsgemäßen Arbeitsmaschine ist das zumindest eine erste Stellelement über eine dazu zugeordnete Fluidleitung mit dem ersten Druck, insbesondere Arbeitsdruck, beaufschlagbar und mit dem zweiten Druck, insbesondere Entspannungsdruck, entspannbar. Das Druckeinstellsystem, insbesondere das zumindest eine Stellelement, ist hierbei bevorzugt über die zumindest eine Fluidleitung mit einer Druckbereitstellungseinrichtung und/oder Druckversorgungseinrichtung, insbesondere einer antreibbaren Pumpe und/oder einem zentralen Druckspeicher, fluidleitend verbunden. Somit wird das Fluid, insbesondere Öl oder Druckluft, über die zumindest eine Fluidleitung, insbesondere für einen Druckaufbau oder eine Druckentspannung, zugebracht und/oder abgeführt. Das Stellelement wird dabei zum Erreichen des eingestellten ersten Drucks zumindest teilweise mit dem Fluid befüllt. Zur Entspannung und somit zum Erreichen des zweiten Drucks, insbesondere Entspannungsdrucks, wird das Fluid über die wenigstens eine Fluidleitung zumindest teilweise vom Sä- und/oder Bodenbearbeitungswerkzeug zur Druckbereitstellungseinrichtung und/oder Druckversorgungseinrichtung rückgeführt. Diese Ausführungsform bietet den Vorteil, dass die Arbeitsmaschine, insbesondere das Druckeinstellsystem und/oder das Stellelement, besonders effizient und/oder bauteilschonend betreibbar und dabei besonders einfach ausgeführt sind.

In einer weiteren Weiterbildung der erfindungsgemäßen Arbeitsmaschine ist dem wenigstens einen Rahmen zumindest ein zweites Stellelement zugeordnet, welches dazu eingerichtet ist, den wenigstens einen Rahmen zwischen der abgesenkten und angehobenen Stellung zu verfahren und/oder zu verbringen. Das zumindest eine zweite Stellelement ist dabei am Schlepper oder vorzugsweise innerhalb der Arbeitsmaschine angeordnet und dabei zumindest einseitig mit dem wenigstens einen Rahmen der Arbeitsmaschine gekoppelt. Besonders bevorzugt weist die Arbeitsmaschine hierbei mehrere Rahmen, insbesondere mehrere Abschnitte des Rahmens, auf, mit denen jeweils mehrere Sä- und/oder Bodenbearbeitungswerkzeuge gekoppelt sind. Dabei werden der Rahmen oder die einzelnen Abschnitte des Rahmens zumindest teilweise mittels des zumindest einen zweiten Stellelementes angehoben und/oder abgesenkt.

Alternativ oder zusätzlich sind der Rahmen und/oder die einzelnen Abschnitte des Rahmens verschwenkbar. Somit wird der Rahmen und damit das zumindest eine Sä- und/oder Bodenbearbeitungswerkzeug alternativ oder zusätzlich mittels des zumindest einen zweiten Stellelementes zwischen einer abgesenkten, insbesondere Arbeitsstellung, und einer angehobenen Stellung, insbesondere Transport- und/oder Vorgewendestellung, verschwenkt. Das zumindest eine zweite Stellelement ist hierbei bevorzugt als hydraulischer oder pneumatischer, vorzugsweise einfach- oder doppelwirkender, Arbeitszylinder ausgebildet und mit dem zumindest einen oder einem anderen Druckeinstellsystem gekoppelt. Da in dieser Ausführungsform anstatt der gesamten Maschine zumindest nur ein Teil und/oder Abschnitt der Arbeitsmaschine verfahrbar ist, ist die Arbeitsmaschine, insbesondere das Druckeinstellsystem, hierbei besonders effizient ausgbeildet.

Darüber hinaus ist eine erfindungsgemäße Arbeitsmaschine bevorzugt bei der die Arbeitsmaschine als eine Verteilmaschine zum Verteilen von granularem Material, insbesondere Saatgut und/oder Dünger, auf einer landwirtschaftlichen Fläche ausgebildet ist. Die Verteilmaschine umfasst hierbei zumindest einen Vorratsbehälter zum Bevorraten des granularen Materials. Ferner umfasst die Verteilmaschine zumindest eine Fördereinrichtung mittels der das granulare Material in einstellbaren Mengen ausgehend vom Vorratsbehälter zu mehreren quer zur Fahrtrichtung angeordneter Sä- und/oder Bodenbearbeitungswerkzeuge gefördert wird. Die Sä- und/oder Bodenbearbeitungswerkzeuge werden hierbei mittels des zumindest einen ersten Stellelementes mit einstellbaren Druck gegen und/oder zumindest teilweise in den Boden angedrückt, wobei für jedes Sä- und/oder Bodenbearbeitungswerkzeug vorzugsweise ein individueller, insbesondere teilflächenspezifischer, Druck einstellbar ist. Aufgrund der vergleichsweise hohen Komplexität bisheriger Verteilmaschinen kann der erfindungsgemäße Aufbau und/oder Betrieb hierbei besonders von Vorteil sein. Verteilmaschinen lassen sich somit erfindungsgemäß in einem besonderen Ausmaß vereinfachen.

In einer anderen bevorzugten Ausführungsform der erfindungsgemäßen Arbeitsmaschine ist die Arbeitsmaschine als eine Einzelkornsämaschine ausgebildet, die mehrere entlang des wenigstens einen Rahmens angeordnete Reiheneinheiten aufweist, wobei die Reiheneinheiten jeweils zumindest eine Vereinzelungseinrichtung zum Dosieren und/oder Vereinzeln des granularen Materials, zumindest ein Sä- und/oder Bodenbearbeitungswerkzeug zum Ausbilden und/oder Andrücken einer für das granulare Material geeigneten Furche, und zumindest ein, vorzugsweise pneumatisches, Fördersystem zum Zubringen und/oder Ablegen des granularen Materials, umfassen. Alternativ oder zusätzlich ist denkbar, dass mehreren Reiheneinheiten, insbesondere Sä- und/oder Bodenbearbeitungswerkzeugen, zumindest ein erstes Stellelement zugeordnet ist. Somit ist die erfindungsgemäße als Einzelkornsämaschine ausgebildete Arbeitsmaschine besonders einfach ausgebildet.

Bei einer anderen besonders bevorzugten Ausführungsform der erfindungsgemäßen Arbeitsmaschine ist die Arbeitsmaschine als eine Bodenbearbeitungsmaschine, insbesondere nach Art eines Pfluges und/oder Grubbers und/oder einer Packerwalze, ausgebildet.

Die der Erfindung zugrunde liegende Aufgabe wird durch ein Verfahren zum Betreiben einer landwirtschaftlichen Arbeitsmaschine gelöst, wobei das Verfahren nach dem Gegenstand des Anspruch 1 ausgeführt ist und zumindest die folgenden Schritte umfasst:
- Erfassen des Betriebszustandes mittels des Steuer- und/oder Regelsystems; und
- Anpassen des einstellbaren Drucks in Abhängigkeit des erfassten Betriebszustandes.

Hinsichtlich der Vorteile und Modifikationen des erfindungsgemäßen Verfahrens wird zunächst auf die Vorteile und Modifikationen der erfindungsgemäßen Arbeitsmaschine verwiesen.

Das erfindungsgemäße Verfahren wird dabei durch ein Auswählen und/oder Abrufen eines Betriebszustandes, insbesondere des ersten und/oder zweiten Betriebszustandes, initiiert. Das Auswählen und Abrufen des für einen Arbeitsvorgang erforderlichen Betriebszustandes wird dabei manuell, insbesondere händisch, von einem Maschinenbediener und/oder besonders bevorzugt automatisiert vom Steuer- und/oder Regelsystem ausgeführt.

Beim erfindungsgemäßen Verfahren wird der zumindest eine erste Druck, insbesondere Arbeitsdruck, für zumindest einen ersten Betriebszustand, und der zumindest eine zweite Druck, insbesondere Entspannungsdruck, für zumindest einen zweiten Betriebszustand eingestellt. Das Druckeinstellsystem führt im Nachgang hierzu die Steuer- und/oder Regelung des Drucks innerhalb des zumindest einen Stellelementes aus. Der zweite Druck, insbesondere Entspannungsdruck, wird hierbei bevorzugt vom Hersteller und/oder Maschinenbediener vor der Bearbeitung eingestellt und/oder auf dem Steuer- und/oder Regelsystem hinterlegt.

Beim erfindungsgemäßen Verfahren wird die Stellung der Arbeitsmaschine mittels des Steuer- und/oder Regelsystems erfasst, wobei ein erster Betriebszustand nach dem Erfassen der abgesenkten Arbeitsstellung, oder ein zweiter Betriebszustand nach dem Erfassen der angehobenen Transport- und/oder Vorgewendestellung, ausgewählt wird. Das Steuer- und/oder Regelsystem erfasst hierbei mittels zumindest eines, vorzugsweise mehreren, dazu zugeordneten Sensoren die Stellung der gesamten und/oder zumindest eines Teils und/oder Abschnitts der Arbeitsmaschine. Anhand der erfassten Stellung wird anschließend der dafür vorgesehene Betriebszustand, vorzugsweise automatisiert mittels des Steuer- und/oder Regelsystems, ausgewählt.

In einer weiteren besonders bevorzugten Weiterbildung des erfindungsgemäßen Verfahrens wird der Druck zeitverzögert, insbesondere nach Ablauf einer vorgegebenen Zeit, nach dem Auswählen oder Erfassen des Betriebszustandes angepasst. Diese Ausführungsform wird für den ersten Betriebszustand, insbesondere nach dem zumindest teilweisen wieder Absenken, der Arbeitsmaschine besonders bevorzugt. Hierbei werden die Arbeitsmaschine und/oder das zumindest eine Sä- und/oder Bodenbearbeitungswerkzeug bis zum Ackerboden abgesenkt und/oder durch das Eigengewicht gegen den Ackerboden angedrückt. Zeitverzögert wird anschließend der Druck innerhalb des Druckeinstellsystems aufgebaut und das zumindest eine Stellelement, insbesondere durch eine Befüllung mit dem Fluid, mit dem eingestellten ersten Druck beaufschlagt.

Alternativ oder zusätzlich wird auch ein zeitverzögertes Entspannen des Druckeinstellsystems, insbesondere Stellelementes, bevorzugt. Hierbei liegt im Vorfeld der erste Druck, insbesondere Arbeitsdruck, innerhalb des zumindest einen Stellelementes und somit an dem zumindest einen Sä- und/oder Bodenbearbeitungswerkzeug an. Erkennt das Steuer- und/oder Regelsystem ein nur zumindest teilweises anheben der Arbeitsmaschine wird der Druck zeitverzögert, insbesondere nach Ablauf einer einstellbaren Zeit, auf den zweiten Druck, insbesondere Entspannungsdruck, entspannt. Die Sä- und/oder Bodenbearbeitungswerkzeuge können hierbei zumindest teilweise, vorzugsweise bis zum Erreichen zumindest eines an der Arbeitsmaschine ausgebildeten Anschlags, aufgrund ihres Eigengewichtes durchhängen.

In einer weiteren vorteilhaften Weiterbildung des erfindungsgemäßen Verfahrens wird eine Position der Arbeitsmaschine mittels des Steuer- und/oder Regelsystems erfasst und der Betriebszustand in Abhängigkeit der erfassten Position ausgewählt. Das Steuer- und/oder Regelsystem erkennt hierbei über eine Positionserfassungseinrichtung die Position des Schleppers und/oder der Arbeitsmaschine auf der landwirtschaftlichen Fläche. Die Fläche ist hierbei in zumindest einen ersten Bereich und zumindest einen zweiten Bereich eingeteilt. Der erste Bereich stellt hierbei eine zu bearbeitende Fläche dar, während der zweite Bereich ein Feldende, -rand, ein Vorgewende und/oder einen Transportbereich in dem typischerweise keine Bearbeitung erforderlich ist darstellt. Erkennt das Steuer- und/oder Regelsystem einen sich während der Überfahrt wechselnden Bereich, werden der Betriebszustand und damit der eingestellte Druck dementsprechend angepasst.

Weitere Einzelheiten der Erfindung sind der Beispielsbeschreibung und den Zeichnungen zu entnehmen. Die Zeichnungen zeigen
- Fig.1: ein erstes Ausführungsbeispiel einer an einem Schlepper anbaubaren, als Einzelkornsämaschine ausgeführten, landwirtschaftlichen Arbeitsmaschine in Arbeitsstellung und in perspektivischer Ansicht von hinten;
- Fig.2: die Arbeitsmaschine aus Fig.2 in einer Transport- und/oder Vorgewendestellung;
- Fig.3: ein zweites Ausführungsbeispiel einer an einem Schlepper anbaubaren, als Einzelkornsämaschine ausgeführten, landwirtschaftlichen Arbeitsmaschine in Arbeitsstellung und in Seitenansicht;
- Fig.4: die Arbeitsmaschine aus Fig.3 in einer Transport- und/oder Vorgewendestellung; und
- Fig.5: ein Ablaufdiagramm eines erfindungsgemäßen Verfahrens zum Betreiben einer landwirtschaftlichen Arbeitsmaschine.

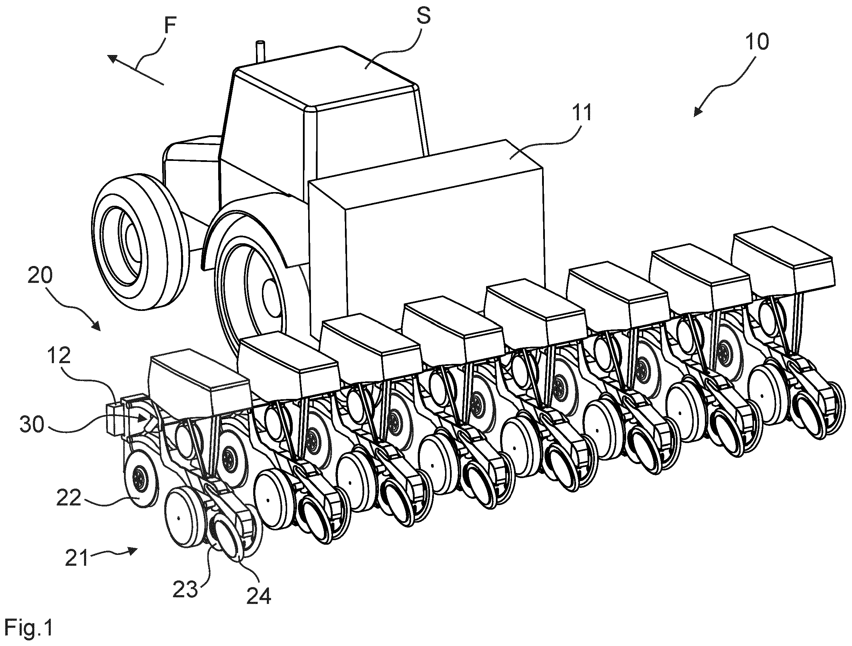

Eine an einem Schlepper S angebaute bzw. angehängte, als Einzelkornsämaschine ausgeführte landwirtschaftliche Arbeitsmaschine 10 ist in Fig.1 zu sehen. Die in unterschiedlichen Betriebszuständen betreibbare Arbeitsmaschine 10 umfasst mehrere Sä- und/oder Bodenbearbeitungswerkzeuge 21 die innerhalb jeweils einer Reiheneinheit 20 angeordnet und über einen Rahmen 12 mit der Arbeitsmaschine 10 gekoppelt sind. In diesem Ausführungsbeispiel sind die vier linken Reiheneinheiten 20 an einem ersten verschwenkbaren Abschnitt des Rahmens 12 und die vier rechten Reiheneinheiten 20 an einem zweiten verschwenkbaren Abschnitt des Rahmens 12 angeordnet. Die Arbeitsmaschine 10 umfasst darüber hinaus über ein in den Figuren nichts gezeigtes hydraulisches Druckeinstellsystem das jeweils ein an den Sä- und/oder Bodenbearbeitungswerkzeugen 21 angeordnetes erstes Stellelement 30 aufweist. Das erste Stellelement 30 ist hierbei dazu eingerichtet, das jeweilige dazu zugeordnete Sä- und/oder Bodenbearbeitungswerkzeug 21 mit einstellbarem Druck gegen eine landwirtschaftliche Fläche, insbesondere Ackerboden, anzudrücken. Hierzu wird das jeweilige einem Sä- und/oder Bodenbearbeitungswerkzeug 21 zugeordnete erste Stellelement 30, welches hier als ein einfachwirkender und/oder längenveränderlicher Arbeitszylinder ausgebildete ist, über das Druckeinstellsystem mit Druck beaufschlagt und entlastet. Hierzu sind die ersten Stellelemente 30 über zumindest eine Fluidleitung mit dem Druckeinstellsystem und insbesondere mit einer dazu zugeordneten Druckerzeugungs- und/oder Druckspeichereinrichtung fluidleitend verbunden. Somit kann das erste Stellelement 30 über die Fluidleitung zumindest teilweise und in Abhängigkeit des eingestellten Drucks mit einem Fluid befüllt und/oder entleert werden.

Die Arbeitsmaschine 10 umfasst ferner ein Steuer- und/oder Regelsystem das signalübertragend mit dem Druckeinstellsystem, insbesondere den ersten Stellelementen 30, gekoppelt und dazu eingerichtet ist, den einstellbaren Druck anzupassen.

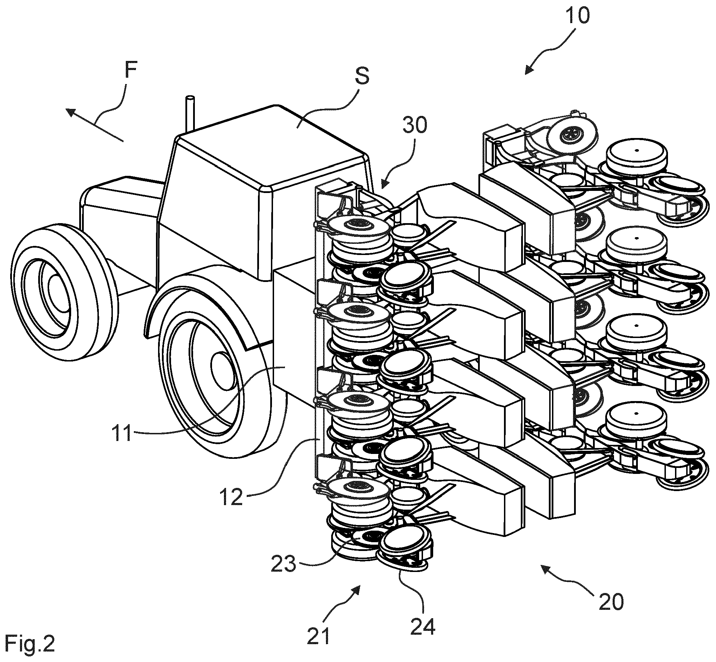

Die Arbeitsmaschine 10 ist erfindungsgemäß, wie in den Fig.1 und Fig.2 gezeigt, in zumindest zwei unterschiedlichen Betriebszuständen betreibbar. Hierbei repräsentiert der in Fig. 1 gezeigte erste Betriebszustand eine auf eine Arbeitsstellung zumindest teilweise abgesenkte Arbeitsmaschine 10. Die Fig.2 zeigt hingegen eine zumindest teilweise in eine Transport- und/oder Vorgewendestellung angehobene Arbeitsmaschine 10, die sich dabei in einem zweiten Betriebszustand befindet. Darüber hinaus ist jeweils dem ersten und zweiten Abschnitt des Rahmens 12 ein zweites, insbesondere als Arbeitszylinders ausgebildetes, Stellelement zugeordnet das dazu eingerichtet ist, den jeweils linken und rechten Abschnitt des Rahmens 12 und somit die Reiheneinheiten 20, insbesondere Sä- und/oder Bodenbearbeitungswerkzeuge 21, anzuheben bzw. zu verschwenken. Alternativ oder zusätzlich sind hierbei auch weitere Betriebszustände, beispielsweise in zumindest einer Zwischenstellung zwischen der vollständig angehobenen und abgesenkten Stellung denkbar. Das Steuer- und/oder Regelsystem ist zusätzlich dazu eingerichtet, die jeweiligen Betriebszustände, insbesondere die Stellungen der Arbeitsmaschine 10, zu erfassen.

Darüber hinaus kann in diesem Ausführungsbeispiel zumindest ein erster Druck, insbesondere Arbeitsdruck, und zumindest ein zweiter Druck, insbesondere Entspannungsdruck, vom Steuer- und/oder Regelsystem und/oder durch einen Bediener eingestellt werden. Somit können unterschiedlich hohe Drücke für die jeweiligen Betriebszustände, insbesondere Stellungen, der Arbeitsmaschine 10 auf dem Steuer- und/oder Regelsystem hinterlegt und bei Bedarf abgerufen werden. Der für den ersten Betriebszustand, insbesondere die abgesenkte Arbeitsstellung, angewandte Arbeitsdruck beträgt typischerweise ein Vielfaches des Entspannungsdrucks und wird üblicherweise zwischen 10 und 50 bar eingestellt. Hierbei sind jedoch auch Drücke von über 50 bar ebenfalls denkbar. Der für den zweiten Betriebszustand, insbesondere die Transport- und/oder Vorgewendestellung, angewandte Entspannungsdruck wird für gewöhnlich zwischen 0 und 10 bar, insbesondere auf Umgebungsdruck, eingestellt. Darüber hinaus kann alternativ oder zusätzlich für optionale Zwischenstellungen, insbesondere weitere Betriebszustände, zumindest ein einstellbarer Zwischendruck eingestellt werden.

Das Steuer- und/oder Regelsystem ist ferner dazu eingerichtet, den, insbesondere für das Druckeinstellsystem und/oder erste Stellelement 30, einstellbaren Druck anhand des erfassten Betriebszustandes, insbesondere der jeweiligen Stellung der Arbeitsmaschine 10, anzupassen. Die Anpassung des Drucks erfolgt in diesem Ausführungsbeispiel automatisiert. Alternativ oder zusätzlich kann der erfasste Betriebszustand, insbesondere die Stellung der Arbeitsmaschine 10, und der dazu zugeordnete Druck in einem Bedien- und/oder Anzeigemittel angezeigt und von einem Bediener ausgewählt und/oder abgerufen werden.

In einer alternativen oder zusätzlichen Ausführungsvariante kann außerdem die Position des Schleppers S und/oder der Arbeitsmaschine 10 erfasst und der Betriebszustand in Abhängigkeit der erfassten Position ausgewählt und/oder angepasst werden. Hierbei kann berücksichtigt werden ob sich der Schlepper S und/oder die Arbeitsmaschine 10 auf einem zu bearbeitenden Bereich auf der landwirtschaftlichen Fläche A oder an einem Feldrand, insbesondere einem Vorgewende, befinden. Somit kann der Betriebszustand beim Überfahren von einem ersten auf einen zweiten Bereich oder umgekehrt gewechselt und/oder angepasst werden.

Die in der Fig. 1 beispielhaft gezeigten Sä- und/oder Bodenbearbeitungswerkzeuge 21 sind entgegen der Fahrtrichtung F gesehen, als ein Furchenöffner, insbesondere Scheibenschar 22, Andruckrolle 23 und Furchenbedeckungsrollen 24 ausgebildet. Alternativ oder zusätzlich sind hierbei auch andere Arten von in der Landwirtschaft bekannten Sä- und/oder Bodenbearbeitungswerkzeugen 21 denkbar. Ferner umfasst die hierbei gezeigte Reiheneinheit 20 eine zwischen den Sä- und/oder Bodenbearbeitungswerkzeugen 21 und einem Zusatzbehälter 25 angeordnete Vereinzelungseinrichtung 26 zum Dosieren und/oder Vereinzeln des granularen Materials. Innerhalb der Arbeitsmaschine 10, insbesondere den Reiheneinheiten 20, ist zumindest ein, insbesondere pneumatisches, Fördersystem zum Zubringen und/oder Ablegen des granularen Materials angeordnet. Das aus einem Vorratsbehälter 11 über die Vereinzelungseinrichtung 25 und das Fördersystem zugebrachte Material wird dabei in einer vom Furchenöffner, insbesondere Scheibenschar 22, ausgebildeten Furche abgelegt und von der in Fahrtrichtung F dahinter angeordneten Andruckrolle 23 angedrückt.

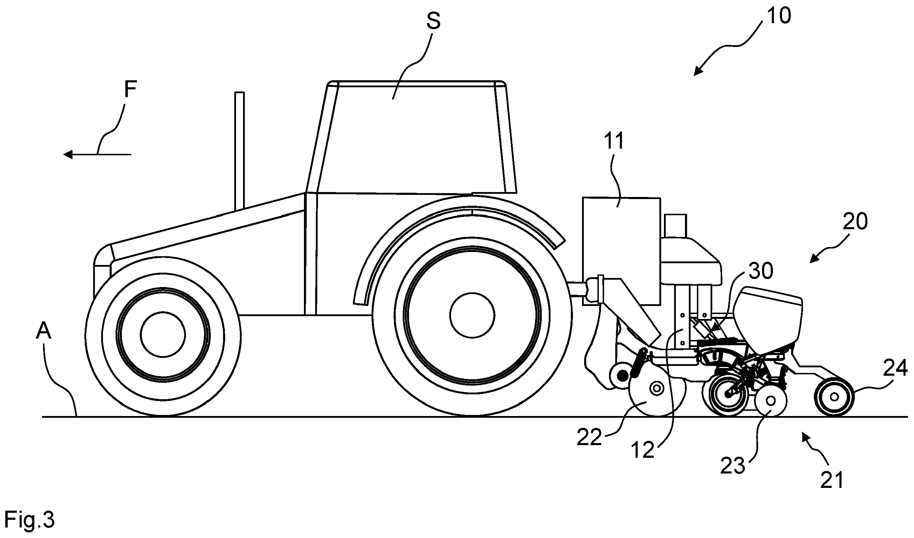

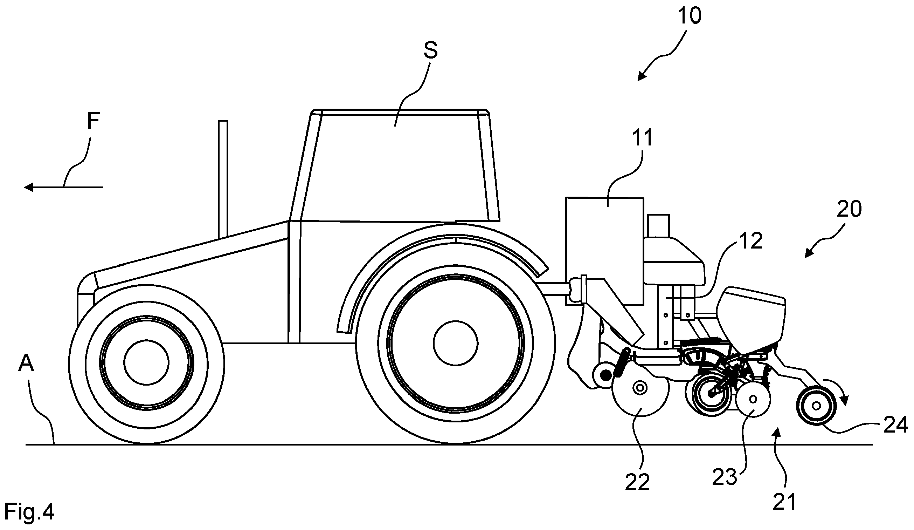

Die Fig.3 und Fig.4 zeigen ein zweites Ausführungsbeispiel der erfindungsgemäßen Arbeitsmaschine 10. Die angebaute Verteilmaschine 10 ist in Fig.1 im ersten Betriebszustand und somit in einer abgesenkten Arbeitsstellung gezeigt, bei der die Sä- und/oder Bodenbearbeitungswerkzeuge 21 mit einstellbarem Druck gegen den Ackerboden A angedrückt werden. Die gesamte Arbeitsmaschine 10 ist in dieser Ausführungsform, wie in Fig.4 gezeigt, über einen an dem Schlepper S angeordneten Dreipunktkraftheber in eine angehobene Stellung, insbesondere Transport- und/oder Vorgewendestellung, angehoben und somit im zweiten Betriebszustand betrieben und/oder verbracht. Der in dem ersten Stellelement 30 anliegende Druck ist hierbei vom Steuer- und/oder Regelsystem auf den zweiten Druck, insbesondere Entspannungsdruck, angepasst. Die Sä- und/oder Bodenbearbeitungswerkzeuge 21 hängen hierbei aufgrund ihres Eigengewichtes zumindest teilweise bis zu an der Arbeitsmaschine 10 ausgebildeten Anschlägen durch.

Nach dem wieder Absenken der Arbeitsmaschine 10 von der Stellung die in Fig.4 gezeigt ist, auf die in Fig.3 gezeigte Arbeitsstellung, wird der zuvor eingestellte zweite Druck, insbesondere Entspannungsdruck, zweitverzögert, nach Ablauf einer vorgegebenen Zeit, auf den ersten Druck, insbesondere Arbeitsdruck aufgebaut. Somit müssen der Schlepper S und/oder die Arbeitsmaschine 10, insbesondere das Druckeinstellsystem, bis zur vollständigen Absenkung und somit dem Erreichen des ersten Betriebszustandes nur den niedrigeren zweiten Druck, insbesondere Entspannungsdruck, innerhalb des zumindest einen ersten Stellelementes 30 überwinden.

Die in den Figuren gezeigten Arbeitsmaschinen 10 sind hierbei beispielhaft als Verteilmaschinen, insbesondere Einzelkornsämaschinen, ausgeführt. Die Erfindungsgemäße Arbeitsmaschine 10 ist jedoch nicht auf Verteilmaschinen beschränkt. Die Arbeitsmaschine 10 kann darüber hinaus auch als Bodenbearbeitungsmaschine, insbesondere mit Pflügen und/oder Grubbern und/oder Packerwalzen und/oder Hackwerkzeugen, ausgeführt sein.

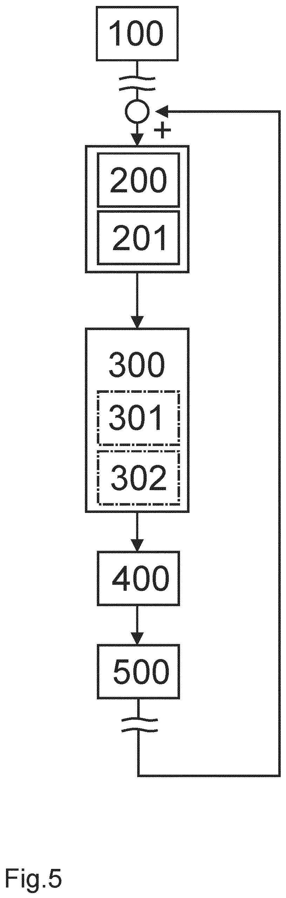

Die Fig.5 zeigt ein Ablaufdiagramm eines Verfahrens zum Betreiben einer erfindungsgemäßen landwirtschaftlichen Arbeitsmaschine 10. Das Verfahren wird durch den nachfolgenden Schritt eingeleitet:
100) Einstellen zumindest eines ersten Drucks, insbesondere Arbeitsdrucks, für zumindest einen ersten Betriebszustand; und/oder einstellen zumindest eines zweiten Drucks, insbesondere Entspannungsdrucks, für zumindest einen zweiten Betriebszustand.

Nachdem der für die Betriebszustände erforderliche erste und/oder zweite Druck, insbesondere Arbeitsdruck oder Entspannungsdruck, von dem Steuer- und/oder Regelsystem und/oder einem Maschinenbediener eingestellt ist, wird zumindest einer der nachfolgenden Schritte ausgeführt:
201) Auswählen eines Betriebszustandes der landwirtschaftlichen Arbeitsmaschine 10 durch einen Bediener und/oder das Steuer- und/oder Regelsystem; und/oder
202) Abrufen eines Betriebszustandes der landwirtschaftlichen Arbeitsmaschine 10 durch einen Bediener und/oder das Steuer- und/oder Regelsystem.

Sobald ein Betriebszustand ausgewählt und/oder abgerufen ist wird der nachfolgende Schritt eingeleitet:
300) Anpassen des Betriebszustandes.

Dieser Schritt kann erfindungsgemäß durch einen der folgenden Schritte ergänzt werden:
301) Absenken der landwirtschaftlichen Arbeitsmaschine 10 in eine abgesenkte Stellung, insbesondere eine Arbeitsstellung; oder
302) Anheben der landwirtschaftlichen Arbeitsmaschine 10 in eine angehobene Stellung, insbesondere eine Transport- und/oder Vorgewendestellung.

Sobald der Betriebszustand der Arbeitsmaschine 10 angepasst ist, wird der folgende Schritt ausgeführt:
400) Erfassen des Betriebszustandes mittels des Steuer- und/oder Regelsystems.

Im Rahmen der Erfassung des Betriebszustandes kann dieser Schritt des Verfahrens durch den folgenden optionalen Schritt weiter differenziert werden:
401) Erfassen der Stellung der Arbeitsmaschine 10 mittels des Steuer- und/oder Regelsystems.

Erfindungsgemäß wird das Verfahren anschließend durch den folgenden Schritt ergänzt:
500) Anpassen des einstellbaren Drucks in Abhängigkeit des erfassten Betriebszustandes.

Das Verfahren kann erfindungsgemäß zwischen dem Erfassen des Betriebszustandes 401) und dem Anpassen des einstellbaren Drucks 500) optional in Abhängigkeit einer vorgegebenen und/oder einstellbaren Zeit verzögert werden.

Alle oben beschriebenen Schritte können sich während des Arbeitsvorgangs ständig wiederholen.

### Bezugszeichenliste

- 10: Landwirtschaftliche Arbeitsmaschine, Verteilmaschine
- 11: Vorratsbehälter
- 12: Rahmen
- 20: Reiheneinheit
- 21: Sä- und/oder Bodenbearbeitungswerkzeug
- 22: Furchenöffner, Scheibenschar
- 23: Andruckrolle
- 24: Furchenbedeckungsrolle
- 30: Erstes Stellelement

- A: Landwirtschaftliche Fläche, Ackerboden
- F: Fahrtrichtung
- S: Schlepper

## Patentansprüche

1. Verfahren zum Betreiben einer landwirtschaftlichen Arbeitsmaschine (10), welche in unterschiedlichen Betriebszuständen betreibbar ist, umfassend, zumindest ein Sä- und/oder Bodenbearbeitungswerkzeug (21) das über wenigstens einen Rahmen (12) mit der Arbeitsmaschine (10) gekoppelt ist, zumindest ein pneumatisches und/oder hydraulisches Druckeinstellsystem das zumindest ein dem Sä- und/oder Bodenbearbeitungswerkzeug (21) zugeordnetes erstes Stellelement (30) aufweist und dazu eingerichtet ist, das zumindest eine erste Stellelement (30) mit einstellbarem Druck zu beaufschlagen und/oder zu entspannen, wobei das zumindest eine Sä- und/oder Bodenbearbeitungswerkzeug (21) mittels des zumindest einen ersten Stellelementes (30) und in Abhängigkeit des einstellbaren Drucks gegen einen landwirtschaftlichen Ackerboden andrückbar ist, und zumindest ein Steuer- und/oder Regelsystem, welches mit dem Druckeinstellsystem, insbesondere dem zumindest einen ersten Stellelement (30), gekoppelt und dazu eingerichtet ist, den einstellbaren Druck anzupassen, mit den Schritten:
- Auswählen und/oder Abrufen eines Betriebszustandes der landwirtschaftlichen Arbeitsmaschine (10) durch einen Bediener und/oder das Steuer- und/oder Regelsystem;
**gekennzeichnet durch die Schritte:**
- Erfassen des Betriebszustandes mittels des Steuer- und/oder Regelsystems; wobei die Arbeitsmaschine zumindest teilweise zwischen einer abgesenkten Stellung und einer angehobenen Stellung verbringbar ist, wobei die abgesenkte Stellung eine Arbeitsstellung und die angehobene Stellung eine Transport- und/oder Vorgewendestellung ist, und wobei die Stellung vom Steuer- und/oder Regelsystem erfasst und der Betriebszustand in Abhängigkeit der Stellung ausgewählt werden, und
- Anpassen des einstellbaren Drucks in Abhängigkeit des erfassten Betriebszustandes; wobei zumindest ein erster Druck, insbesondere Arbeitsdruck, und zumindest ein zweiter Druck, insbesondere Entspannungsdruck, vom Steuer- und/oder Regelsystem und/oder durch einen Bediener eingestellt wird, und der zumindest eine erste Druck, insbesondere Arbeitsdruck, für zumindest einen ersten Betriebszustand, und der zumindest eine zweite Druck, insbesondere Entspannungsdruck, für zumindest einen zweiten Betriebszustand eingestellt wird.

2. Verfahren nach Anspruch 1, **dadurch gekennzeichnet, dass** der Druck zeitverzögert, insbesondere nach Ablauf einer vorgegebenen Zeit, nach dem Auswählen oder Erfassen des Betriebszustandes angepasst wird.

3. Verfahren nach zumindest einem der vorgenannten Ansprüche,
**gekennzeichnet durch die Schritte:**
- Erfassen einer Position der Arbeitsmaschine (10) mittels des Steuer- und/oder Regelsystems; und
- Auswählen des Betriebszustandes in Abhängigkeit der erfassten Position.

## Claims

1. Method for operating an agricultural machine (10) which can be operated in different operating states, comprising at least one sowing and/or soil-cultivating tool (21), which is coupled to the machine (10) via at least one frame (12), at least one pneumatic and/or hydraulic pressure-adjusting system, which has at least one first actuating element (30) associated with the sowing and/or soil-cultivating tool (21) and is designed to apply and/or release adjustable pressure to and/or from the at least one first actuating element (30), it being possible for the at least one sowing and/or soil-cultivating tool (21) to be pressed against agricultural arable soil by means of the at least one first actuating element (30) and depending on the adjustable pressure, and at least one open-loop and/or closed-loop control system, which is coupled to the pressure-adjusting system, in particular to the at least one first actuating element (30), and is configured to adjust the adjustable pressure, the method comprising the steps of:
- selecting and/or retrieving an operating state of the agricultural machine (10) by an operator and/or the open-loop and/or closed-loop control system;
**characterized by** the steps of:
- detecting the operating state by means of the open-loop and/or closed-loop control system; the machine being movable at least partially between a lowered position and a raised position, the lowered position being a working position and the raised position being a transport and/or headland position, and the position being detected by the open-loop and/or closed-loop control system and the operating state being selected on the basis of the position, and
- adjusting the adjustable pressure on the basis of the detected operating state; at least a first pressure, in particular working pressure, and at least a second pressure, in particular release pressure, being set by the open-loop and/or closed-loop control system and/or by an operator, and said at least first pressure, in particular working pressure, being set for at least a first operating state, and said at least second pressure, in particular release pressure, being set for at least a second operating state.

2. Method according to claim 1, **characterized in that** the pressure is adjusted in a time-delayed manner, in particular after a predetermined time has elapsed, after the selection or detection of the operating state.

3. Method according to at least one of the preceding claims,
**characterized by** the steps of:
- detecting a position of the machine (10) by means of the open-loop and/or closed-loop control system; and
- selecting the operating state on the basis of the detected position.

## Revendications

1. Procédé permettant de faire fonctionner une machine de travail (10) agricole, laquelle peut fonctionner dans différents états de fonctionnement, comprenant au moins un outil de semis et/ou de travail du sol (21) qui est accouplé à la machine de travail (10) par l'intermédiaire d'au moins un cadre (12), au moins un système de réglage de pression pneumatique et/ou hydraulique qui présente au moins un premier élément de réglage (30) associé à l'outil de semis et/ou de travail du sol (21) et qui est conçu pour solliciter et/ou pour détendre l'au moins un premier élément de réglage (30) avec une pression réglable, dans lequel l'au moins un outil de semis et/ou de travail du sol (21) peut être pressé contre une terre agricole au moyen de l'au moins un premier élément de réglage (30) et en fonction de la pression réglable, et au moins un système de commande et/ou de régulation, lequel est couplé avec le système de réglage de pression, en particulier l'au moins un premier élément de réglage (30), et est conçu pour adapter la pression réglable, comportant les étapes de :
- sélection et/ou appel d'un état de fonctionnement de la machine de travail (10) agricole par un opérateur et/ou le système de commande et/ou de régulation ;
**caractérisé par** les étapes de :
- détection de l'état de fonctionnement au moyen du système de commande et/ou de régulation ; dans lequel la machine de travail peut être déplacée, au moins partiellement, entre une position abaissée et une position relevée, dans lequel la position abaissée correspond à une position de travail et la position relevée à une position de transport et/ou bout de champ, et dans lequel la position est détectée par le système de commande et/ou de régulation, et l'état de fonctionnement est sélectionné en fonction de la position, et
- adaptation de la pression réglable en fonction de l'état de fonctionnement détecté ; dans lequel au moins une première pression, en particulier une pression de travail, et au moins une seconde pression, en particulier une pression de détente, sont réglées par la système de commande et/ou de régulation et/ou par un opérateur, et l'au moins une première pression, en particulier la pression de travail, est réglée pour au moins un premier état de fonctionnement, et l'au moins une seconde pression, en particulier la pression de détente, est réglée pour au moins un second état de fonctionnement.

2. Procédé selon la revendication 1, **caractérisé en ce que** la pression est adaptée de manière différée, en particulier après l'écoulement d'un temps prédéfini, après la sélection ou la détection de l'état de fonctionnement.

3. Procédé selon au moins l'une des revendications précédentes,
**caractérisé par** les étapes de :
- détection d'une position de la machine de travail (10) au moyen du système de commande et/ou de régulation ; et
- sélection de l'état de fonctionnement en fonction de la position détectée.
